Europäisches Patentamt

European Patent Office

Office européen des brevets

(11) Numéro de publication : **0 351 914 B1**

# FASCICULE DE BREVET EUROPEEN

(45) Date de publication du fascicule du brevet :
10.05.95 Bulletin 95/19

(51) Int. Cl.⁶ : **H04L 27/36**

(21) Numéro de dépôt : **89201866.4**

(22) Date de dépôt : **17.07.89**

(54) **Dispositif de modulation pour moduler une onde en phase et en amplitude.**

(30) Priorité : **22.07.88 FR 8809952**

(43) Date de publication de la demande :
**24.01.90 Bulletin 90/04**

(45) Mention de la délivrance du brevet :
**10.05.95 Bulletin 95/19**

(84) Etats contractants désignés :
**DE FR GB IT SE**

(56) Documents cités :
**WO-A-83/01167**
**GB-A- 2 047 053**

(73) Titulaire : **TRT TELECOMMUNICATIONS
RADIOELECTRIQUES ET TELEPHONIQUES
88 rue Brillat Savarin
F-75013 Paris (FR)**

(72) Inventeur : **Daulasim, Khampuc SOCIETE
CIVILE S.P.I.D.
209 rue de l'Université
F-75007 Paris (FR)**

(74) Mandataire : **Chaffraix, Jean et al
Société Civile S.P.I.D.
156, Boulevard Haussmann
F-75008 Paris (FR)**

## Description

La présente invention concerne un dispositif de modulation pour moduler une onde en phase et en amplitude, dispositif comportant une entrée pour recevoir des groupements constitués de n éléments binaires les plus significatifs et de p éléments binaires les moins significatifs, un circuit de déphasage pour fournir deux composantes déphasées de ladite onde et un circuit de modulation pour moduler en amplitude les deux composantes en fonction desdits groupements.

De tels dispositifs trouvent d'importantes applications, notamment dans les modems, appareils utilisés dans les transmissions de données.

A l'heure actuelle des débits de transmission de plus en plus élevés sont exigés tandis que les bandes passantes des canaux de transmission restent limitées. Un moyen pour concilier ces exigences contradictoires consiste à utiliser une modulation combinée d'amplitude et de phase d'une porteuse. A chaque combinaison amplitude-phase correspond un groupement d'éléments binaires de sorte que pour obtenir de hauts débits on doit utiliser un grand nombre de combinaisons. Par exemple la recommandation V33 du CCITT préconisé, pour un débit de 14400 éléments binaires par seconde, l'emploi de 128 combinaisons dont chacune représente un groupement de 7 éléments binaires.

Il est évident, pour élaborer ces combinaisons, de pré-programmer des mémoires qui sont adressées par lesdits groupements et qui fournissent en réponse les informations de phase et d'amplitude de la porteuse. Cependant, on estime que la taille d'une telle mémoire, surtout pour satisfaire la recommandation précitée, est trop importante lorsque ce dispositif est un composant d'un modem du type intégré. Ce genre de modem utilise un processeur de signal comme cela est décrit dans l'article de L.MARY "Processeur de signaux : capacité et performances" paru dans la revue TOUTE L'ELECTRONIQUE N°7, en octobre 1987. Les processeurs sont souvent associés sur une même puce avec des mémoires de taille relativement petite, de sorte qu'il n'est pas possible d'emmagasiner de nombreuses combinaisons.

La solution proposée dans le brevet GB-A 2 047 053 consiste à n'emmagasiner que certaines combinaisons amplitude-phase dans la mémoire, les autres combinaisons pouvant se déduire par le calcul de celles qui sont emmagasinées. Toutefois la mémoire requise par ce dispositif reste importante et certaines opérations mises en oeuvre sont lentes et impliquent trop de calculs (notamment des divisions dans le cas des modulations du type impliqué dans l'avis V33) pour qu'il puisse être aisément appliqué à la fabrication de modems intégrés.

La présente invention propose un dispositif de modulation du genre cité dans le préambule qui est, plus particulièrement, destiné à être inséré dans un modem de type intégré et qui donc, ne nécessite pas une mémoire importante pour enregistrer de nombreuses combinaisons.

Pour cela, un tel dispositif de modulation est remarquable en ce que le circuit de modulation comporte des moyens de mémorisation adressés par les n éléments binaires les plus significatifs du groupement d'entrée pour fournir une première valeur approchée de l'amplitude correspondant audit groupement, ces moyens de mémorisation contenant la correspondance entre chaque combinaison de ces n éléments binaires et la valeur approchée d'amplitude qui lui est associée, et des moyens de calcul pour obtenir une valeur exacte d'amplitude en modifiant la première valeur approchée en fonction des p éléments binaires les moins significatifs du groupement d'entrée.

La description suivante accompagnée des dessins ci-annexés, le tout donné à titre d'exemple non limitatif, fera bien comprendre comment l'invention peut être réalisée.

La figure 1 représente un exemple de réalisation d'un dispsoitif de modulation conforme à l'invention.

La figure 2 représente une constellation relative à la vitesse normale de transmission selon la recommandation V33.

La figure 3 représente l'exemple de réalisation préféré d'un dispositif de modulation conforme à l'invention.

La figure 4 représente une constellation relative à la vitesse de repli de transmission toujours selon la recommandation V33.

La figure 5 montre un ordinogramme représentant le fonctionnemnt du dispositif de la figure 3.

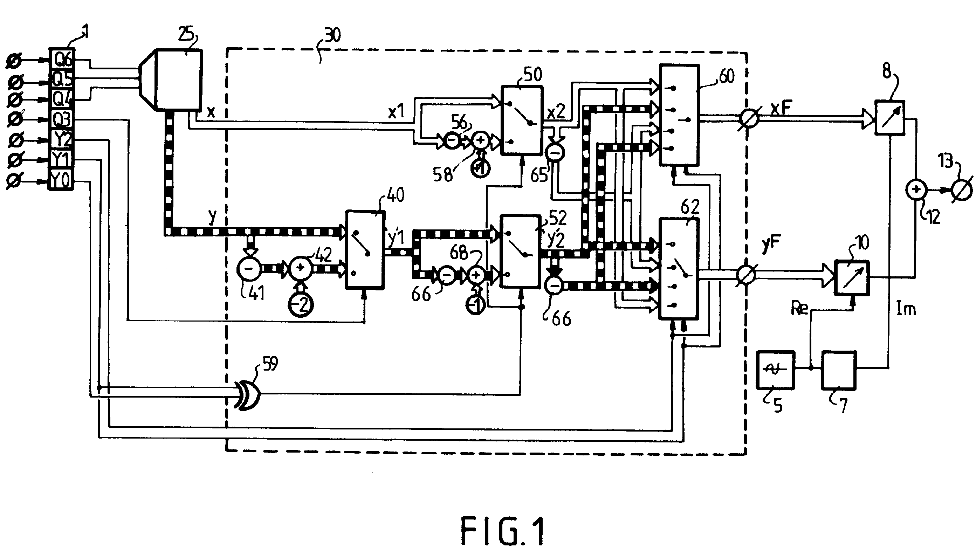

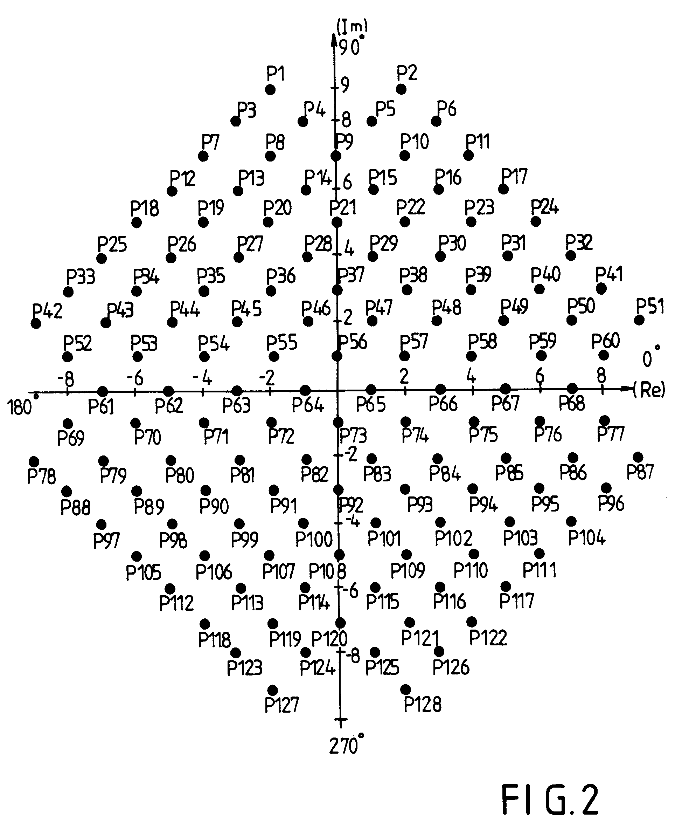

A la figure 1, la référence 1 indique un registre destiné à contenir un groupement de 7 éléments binaires Y0, Y1, Y2, Q3, Q4, Q5 et Q6 ; à ces 7 éléments binaires vont correspondre 128 combinaisons amplitude-phase d'une porteuse. Ces 128 combinaisons sont représentées sous forme de constellation à la figure 2. Tout ceci est en conformité avec la recommandation V33 précitée. Pour obtenir ces combinaisons, il est possible de moduler en amplitude deux composantes en quadrature de la porteuse. A la figure 1, l'oscillateur 5 fournit une composante Re et un déphaseur 7 déphasant de $\pi/2$ cette composante pour fournir une deuxième composante Im. Deux modulateurs d'amplitude 8 et 10 modulent respectivement ces composantes. En agissant discrètement sur ces différentes amplitudes on obtiendra les 128 points de la figure 2 dont chacun représente une combinaison amplitude-phase. Le Tableau I ci-dessous donne la valeur des groupements GR : Q6, Q5,

2

Q4, Q3, Y2, Y1 et Y0 relative à chacun de ces points et l'amplitude des composantes Im et Re. Un additionneur 12 ajoute ces valeurs pour les fournir à la sortie 13.

**TABLEAU I**

| Point | GR | Re | Im |
|---|---|---|---|
| P1 | 0000110 | − 2 | + 9 |
| P2 | 0001110 | + 2 | + 9 |
| P3 | 0000011 | − 3 | + 8 |
| P4 | 1001111 | − 1 | + 8 |
| P5 | 0001011 | + 1 | + 8 |
| P6 | 1000111 | + 3 | + 8 |
| P7 | 1100100 | − 4 | + 7 |
| P8 | 1001010 | − 2 | + 7 |
| P9 | 1110100 | 0 | + 7 |
| P10 | 1000010 | + 2 | + 7 |
| P11 | 1010100 | + 4 | + 6 |
| P12 | 1011101 | − 5 | + 6 |
| P13 | 1100001 | − 3 | + 6 |
| P14 | 1111101 | − 1 | + 6 |
| P15 | 1110001 | + 1 | + 6 |
| P16 | 1101101 | + 3 | + 6 |
| P17 | 1010001 | + 5 | + 6 |
| P18 | 1010110 | − 6 | + 5 |
| P19 | 1011000 | − 4 | + 5 |
| P20 | 0010110 | − 2 | + 5 |
| P21 | 1111000 | 0 | + 5 |
| P22 | 0011110 | + 2 | + 5 |
| P23 | 1101000 | + 4 | + 5 |
| P24 | 1011110 | + 6 | + 5 |
| P25 | 1010011 | − 7 | + 4 |
| P26 | 1101111 | − 5 | + 4 |
| P27 | 0010011 | − 3 | + 4 |
| P28 | 0101111 | − 1 | + 4 |
| P29 | 0011011 | + 1 | + 4 |
| P30 | 0100111 | + 3 | + 4 |
| P31 | 1011011 | + 5 | + 4 |
| P32 | 1100111 | + 7 | + 4 |
| P33 | 1000100 | − 8 | + 3 |
| P34 | 1101010 | − 6 | + 3 |
| P35 | 0100100 | − 4 | + 3 |
| P36 | 0101010 | − 2 | + 3 |
| P37 | 0110100 | 0 | + 3 |
| P38 | 0100010 | + 2 | + 3 |
| P39 | 0010100 | + 4 | + 3 |
| P40 | 1100010 | + 6 | + 3 |
| P41 | 0000100 | + 8 | + 2 |
| P42 | 0001101 | − 9 | + 2 |
| P43 | 1000001 | − 7 | + 2 |
| P44 | 0011101 | − 5 | + 2 |
| P45 | 0100001 | − 3 | + 2 |
| P46 | 0111101 | − 1 | + 2 |
| P47 | 0110001 | + 1 | + 2 |
| P48 | 0101101 | + 3 | + 2 |
| P49 | 0010001 | + 5 | + 2 |
| P50 | 1001101 | + 7 | + 2 |
| P51 | 0000001 | + 9 | + 2 |
| P52 | 0001000 | − 8 | + 1 |
| P53 | 1101110 | − 6 | + 1 |
| P54 | 0011000 | − 4 | + 1 |
| P55 | 0110110 | − 2 | + 1 |
| P56 | 0111000 | 0 | − 1 |
| P57 | 0111110 | + 2 | + 1 |
| P58 | 0101000 | + 4 | + 1 |
| P59 | 1111110 | + 6 | + 1 |
| P60 | 1001000 | + 8 | + 1 |
| P61 | 1110011 | − 7 | 0 |
| P62 | 1111111 | − 5 | 0 |
| P63 | 0110011 | − 3 | 0 |
| P64 | 0111111 | − 1 | 0 |

TABLEAU I (suite)

| | GR | Re | Im | | GR | Re | Im | | GR | Re | Im | | GR | Re | Im |
|---|---|---|---|---|---|---|---|---|---|---|---|---|---|---|---|
| P65 | 111011 | + 1 | 0 | P81 | 0101001 | - 3 | - 2 | P97 | 1100011 | - 7 | - 4 | P113 | 1101001 | - 3 | - 6 |
| P66 | 110111 | + 3 | 0 | P82 | 0110101 | - 1 | - 2 | P98 | 1011111 | - 5 | - 4 | P114 | 1110101 | - 1 | - 6 |
| P67 | 111011 | + 5 | 0 | P83 | 0111001 | + 1 | - 2 | P99 | 0100011 | - 3 | - 4 | P115 | 1111001 | + 1 | - 6 |
| P68 | 110111 | + 7 | 0 | P84 | 0100101 | + 3 | - 2 | P100 | 0011111 | - 1 | - 4 | P116 | 1100101 | + 3 | - 6 |
| P69 | 00100 | - 8 | - 1 | P85 | 0011001 | + 5 | - 2 | P101 | 0101011 | + 1 | - 4 | P117 | 1011001 | + 5 | - 6 |
| P70 | 111010 | - 6 | - 1 | P86 | 1000101 | + 1 | - 2 | P102 | 0010111 | + 3 | - 4 | P118 | 1010000 | - 4 | - 7 |
| P71 | 101100 | - 4 | - 1 | P87 | 0001001 | + 9 | - 2 | P103 | 1101011 | + 5 | - 4 | P119 | 1000110 | - 2 | - 7 |
| P72 | 111010 | - 2 | - 1 | P88 | 0000000 | - 8 | - 3 | P104 | 1010111 | + 7 | - 4 | P120 | 1110000 | 0 | - 7 |
| P73 | 111100 | 0 | - 1 | P89 | 1100110 | - 6 | - 3 | P105 | 1011010 | - 6 | - 5 | P121 | 1001110 | + 2 | - 7 |
| P74 | 110010 | + 2 | - 1 | P90 | 0010000 | - 4 | - 3 | P106 | 1101100 | - 4 | - 5 | P122 | 1100000 | + 4 | - 7 |
| P75 | 011100 | + 4 | - 1 | P91 | 0100110 | - 2 | - 3 | P107 | 0011010 | - 2 | - 5 | P123 | 1000011 | - 3 | - 8 |
| P76 | 110010 | + 6 | - 1 | P92 | 0110000 | 0 | - 3 | P108 | 1111100 | 0 | - 5 | P124 | 0001111 | - 1 | - 8 |
| P77 | 001100 | + 8 | - 1 | P93 | 0101110 | + 2 | - 3 | P109 | 0010010 | + 2 | - 5 | P125 | 1001011 | + 1 | - 8 |
| P78 | 000101 | - 9 | - 2 | P94 | 0100000 | + 4 | - 3 | P110 | 1011100 | + 4 | - 5 | P126 | 0000111 | + 3 | - 8 |
| P79 | 001001 | - 7 | - 2 | P95 | 1101110 | + 6 | - 3 | P111 | 1010010 | + 6 | - 5 | P127 | 0001010 | - 2 | - 9 |
| P80 | 010101 | - 5 | - 2 | P96 | 1000000 | + 8 | - 3 | P112 | 1010101 | - 5 | - 6 | P128 | 0000010 | + 2 | - 9 |

EP 0 351 914 B1

Conformément à l'invention le dispositif de modulation comporte une mémoire 25 adressée par les éléments binaires Q6, Q5 et Q4 et fournit en binaire des valeurs d'amplitude d'origine relative aux composantes Re, Im ; ces valeurs d'amplitude "x" et "y" sont notées pour la facilité de l'exposé en système décimal dans le Tableau II ci-dessous.

## TABLEAU II

| Q6 | Q5 | Q4 | x | y |
|---|---|---|---|---|
| 0 | 0 | 0 | − 8 | − 3 |
| 0 | 0 | 1 | − 4 | − 3 |
| 0 | 1 | 0 | + 4 | − 3 |
| 0 | 1 | 1 | 0 | − 3 |
| 1 | 0 | 0 | + 8 | − 3 |
| 1 | 0 | 1 | − 4 | − 7 |
| 1 | 1 | 0 | + 4 | − 7 |
| 1 | 1 | 1 | 0 | − 7 |

Le dispositif de l'invention comporte aussi un organe de calcul 30 pour obtenir les valeurs finales d'amplitude Re et Im en modifiant les valeurs "x" et "y" en fonction des éléments binaires Q3, Y2, Y1 et Y0. Cet organe 30 comporte tout d'abord un multiplexeur 40 qui fournit à sa sortie la valeur Y1 qui est soit la valeur initiale "y" soit la valeur -y-2 ; cette dernière valeur est obtenue au moyen d'un inverseur 41 et d'un additionneur 42 qui ajoute "-2" à la valeur élaborée par l'inverseur 41. La position du multiplexeur 40 est déterminée par l'élément binaire Q3 de sorte que l'on peut écrire les valeurs x1 et y1 établies à partir de x et y :

Si Q3 = 0 alors x1 = x et y1 = y
Si Q3 = 1 alors x1 = x et y1 = -y+2

Deux autres multiplexeurs 50 et 52 sont prévus pour fournir à leur sortie respectivement les valeurs x2 et y2. La valeur x2 peut être soit la valeur x1 (ou x) soit la valeur -x1+1 qui est obtenue au moyen d'un inverseur 56 et d'un additionneur 58 qui ajoute "+1" à la valeur élaborée par l'inverseur 56. La valeur y2 peut être soit la valeur y1 soit la valeur -y1-1 qui est obtenue au moyen d'un inverseur 66 et d'un additionneur 68 ; cet additionneur 68 ajoute la valeur "-1" à la valeur élaborée par l'inverseur 66. La position des multiplexeurs 50 et 52 est déterminée par la valeur logique d'un signal apparaissant à la sortie d'une porte "OU-EXCLUSIF" 59 de sorte que l'on peut écrire :

Si Y1 + Y0 = 0        alors x2 = x1        y2 = y1
Si Y1 + Y0 = 1        alors x2 = -y1+1        y2 = -y1-1

Pour élaborer les valeurs finales xF et yF qui déterminent l'amplitude des composantes Re et Im, il est prévu deux multiplexeurs 60 et 62 à quatre positions qui reçoivent sur leurs entrées les valeurs x2, y2, -x2 et -y2 les valeurs négatives étant obtenues par les inverseurs 65 et 66 respectivement. La position de ces multiplexeurs est régie par les éléments binaires Y2 et Y1. Le Tableau III ci-dessous donne les valeurs xf et yF en fonction de Y2 et Y1.

## TABLEAU III

| Y2 | Y1 | xF | yF |
|---|---|---|---|
| 0 | 0 | x2 | y2 |
| 0 | 1 | y2 | -x2 |
| 1 | 0 | -x2 | -y2 |
| 1 | 1 | -y2 | x2 |

5

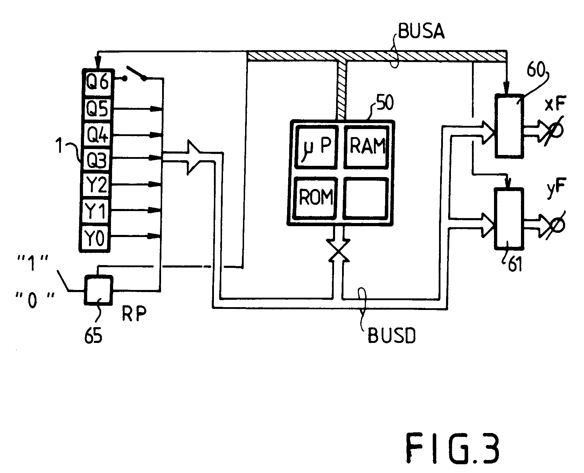

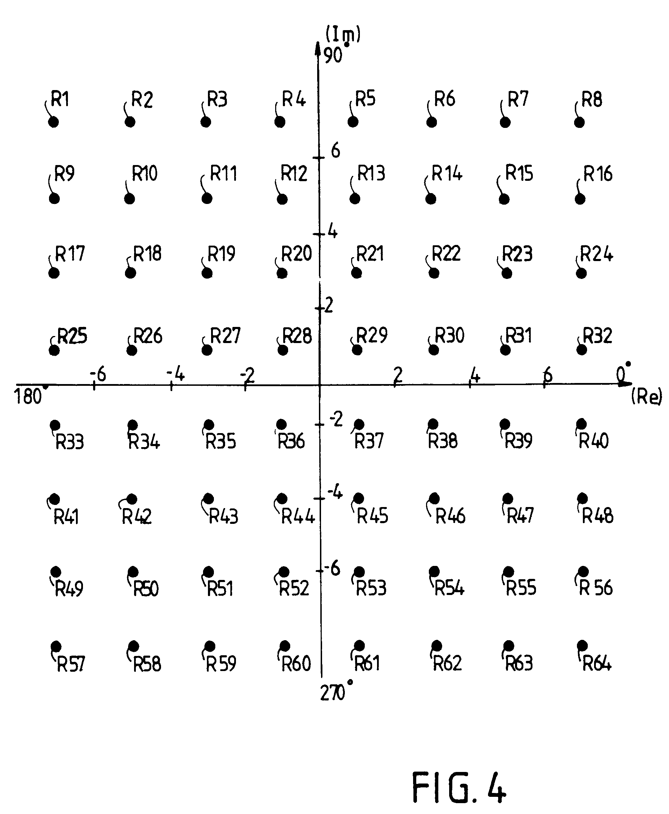

La figure 3 montre le mode de réalisation préféré d'un dispositif conforme à l'invention. Il est bâti autour d'un ensemble à microprocesseur 50 contenant une mémoire de travail à accès aléatoires (mémoire RAM) et une mémoire contenant le programme de fonctionnement ainsi que des données dont notamment celles indiquées au Tableau III (mémoire ROM), ainsi que le microprocesseur (μP) proprement dit. Cet ensemble communique à l'extérieur par l'intermédiaire d'une ligne de données BUSD pour recueillir les données provenant notamment du registre 1 et pour les fournir à des registres finals 60 et 61 contenant respectivement les valeurs finales xF et yF. Une ligne BUSA permet de sélectionner ces différents registres 1, 65, 61 ainsi qu'un registre 65. Ce registre contient une indication de repli. En effet, si on se reporte à la recommandation V33, il est prévu de transmettre des données à une vitesse de repli qui est de 12000 éléments binaires/s au lieu de la vitesse de 14000 éléments binaires impliquant la constellation représentée à la figure 2. La vitesse de repli implique donc une autre constellation représentée à la figure 4. Le Tableau IV donne les groupements d'éléments binaires de repli Q5, Q4, Q3, Y2, Y1, Y0 en fonction des valeurs finales xF et yF.

**TABLEAU IV**

| | | xF | yF | | | | xF | yF |
|---|---|---|---|---|---|---|---|---|
| R 1 | 010100 | − 7 | + 7 | | R33 | 000100 | − 7 | − 1 |
| R 2 | 010001 | − 5 | + 7 | | R34 | 000001 | − 5 | − 1 |
| R 3 | 111110 | − 3 | + 7 | | R35 | 001110 | − 3 | − 1 |
| R 4 | 000111 | − 1 | + 7 | | R36 | 101111 | − 1 | − 1 |
| R 5 | 011100 | + 1 | + 7 | | R37 | 101100 | + 1 | − 1 |
| R 6 | 011001 | + 3 | + 7 | | R38 | 101001 | + 3 | − 1 |
| R 7 | 110110 | + 5 | + 7 | | R39 | 100110 | + 5 | − 1 |
| R 8 | 010111 | + 7 | + 7 | | R40 | 011111 | + 7 | − 1 |
| R 9 | 110101 | − 7 | + 5 | | R41 | 111101 | − 7 | − 3 |
| R10 | 110000 | − 5 | + 5 | | R42 | 111000 | − 5 | − 3 |
| R11 | 111011 | − 3 | + 5 | | R43 | 001011 | − 3 | − 3 |
| R12 | 000010 | − 1 | + 5 | | R44 | 101010 | − 1 | − 3 |
| R13 | 100101 | + 1 | + 5 | | R45 | 001101 | + 1 | − 3 |
| R14 | 100000 | + 3 | + 5 | | R46 | 001000 | + 3 | − 3 |
| R15 | 110011 | + 5 | + 5 | | R47 | 100011 | + 5 | − 3 |
| R16 | 010010 | + 7 | + 5 | | R48 | 011010 | + 7 | − 3 |
| R17 | 011110 | − 7 | + 3 | | R49 | 010110 | − 7 | − 5 |
| R18 | 100111 | − 5 | + 3 | | R50 | 110111 | − 5 | − 5 |
| R19 | 001100 | − 3 | + 3 | | R51 | 100100 | − 3 | − 5 |
| R20 | 001001 | − 1 | + 3 | | R52 | 100001 | − 1 | − 5 |
| R21 | 101110 | + 1 | + 3 | | R53 | 000110 | + 1 | − 5 |
| R22 | 001111 | + 3 | + 3 | | R54 | 111111 | + 3 | − 5 |
| R23 | 111100 | + 5 | + 3 | | R55 | 110100 | + 5 | − 5 |
| R24 | 111001 | + 7 | + 3 | | R56 | 110001 | + 7 | − 5 |
| R25 | 011011 | − 7 | + 1 | | R57 | 010011 | − 7 | − 7 |
| R26 | 100010 | − 5 | + 1 | | R58 | 110010 | − 5 | − 7 |
| R27 | 101101 | − 3 | + 1 | | R59 | 011101 | − 3 | − 7 |
| R28 | 101000 | − 1 | + 1 | | R60 | 011000 | − 1 | − 7 |
| R29 | 101011 | + 1 | + 1 | | R61 | 000011 | + 1 | − 7 |
| R30 | 001010 | + 3 | + 1 | | R62 | 111010 | + 3 | − 7 |
| R31 | 000101 | + 5 | + 1 | | R63 | 010101 | + 5 | − 7 |
| R32 | 000000 | + 7 | + 1 | | R64 | 010000 | + 7 | − 7 |

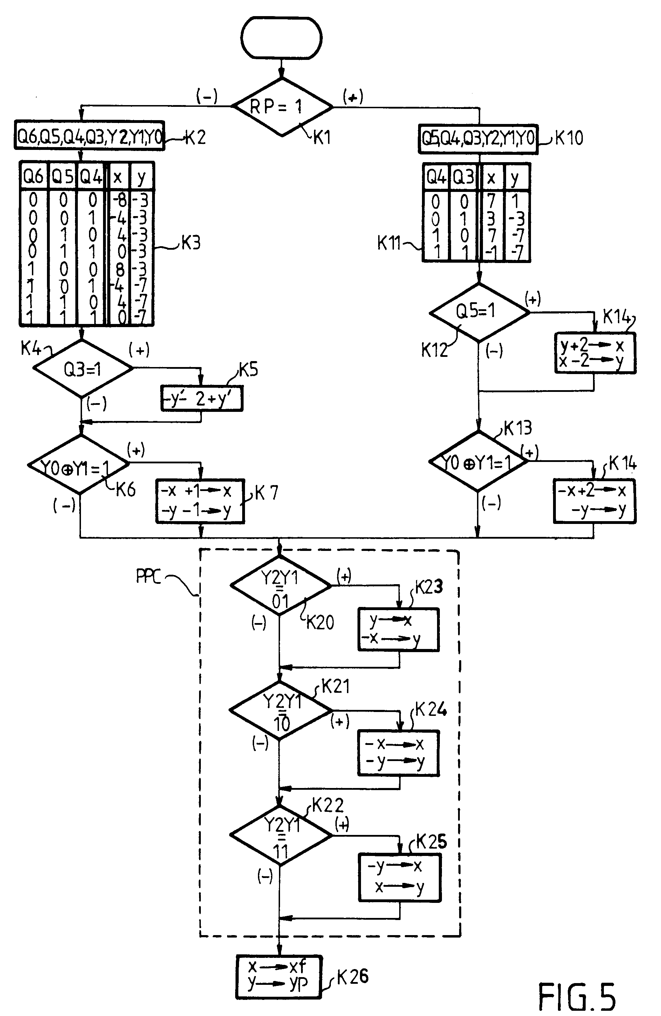

Le fonctionnement du dispositif préféré de l'invention est expliqué maintenant à l'aide de l'ordinogramme de la figure 5.

Le déroulement du programme représenté par cet ordinogramme débute à la case K1 qui indique un test de la valeur RP. Cette valeur RP contenue dans le registre 65, indique, si la valeur est "1", que la transmission doit avoir lieu avec la vitesse de repli et sinon, que cette transmission doit s'effectuer à la vitesse normale.

Dans le cas de la vitesse normale on passe à la case K2 où l'on indique une lecture des 7 éléments binaires à transmettre Q6, Q5, Q4, Q3, Y2, Y1, Y0. En fonction des éléments binaires Q6, Q5, Q4 on affecte une valeur à x et y conformément au tableau de la case K3 qui est identique au Tableau II. Puis à la case K4, on teste la valeur de l'élément binaire Q3. Si celui-ci est égal à "1" la valeur de y est transformée : cette nouvelle valeur est -y-2 comme cela est indiqué à la case K5. A la case K6 on teste le résultat de l'oparation "OU-EXCLUSIF" effectuée sur les éléments Y0 et Y1. Si le résultat est "0" on passe à une partie de programme PPC. Si le résultat de l'opération est "1" alors on effectue une transformation telle qu'indiquée à la case K7, c'est-à-dire que x prend la valeur : -x+1 et y, la valeur -y-1. Ensuite on passe à la partie de programme PPC.

Si le résultat du test de la case K1 est positif on va alors à la case K10 où l'on lit les éléments binaires Q4, Q4, Q3, Y2, Y1, Y0 utilisés pour la vitesse de repli. En fonction des éléments Q4 et Q3 dont les valeurs peuvent être 00, 01, 10 et 11 on affecte (voir case K11) respectivement à x les valeurs 7, 3, 7, -1 et à y, les valeurs 1, -3, -7 et -7. Puis à la case K12 on teste la valeur de l'élément binaire Q5. Si cette valeur est "0" on passe à la case K13 ; si elle est "1" on substitue à la valeur x la valeur y+2 et à la valeur y la valeur x-2. Ceci est indiqué à la case K14. A la case K13, on teste le résultat de l'opération OU-EXCLUSIF effectuée sur les éléments binaires Y0 et Y1. Si le résultat est "0" on passe à la partie de programme PPC. Si le résultat est "1" on effectue une transformation telle qu'indiquée à la case K15, c'est-à-dire que la valeur x prend la valeur -x+2 et que y prend la valeur opposée -y et l'on passe à la partie de programme PPC.

Cette partie de programme est commune pour le traitement à la vitesse normale et à la vitesse de repli et l'on doit bien remarquer que ceci est avantageux car on économise ainsi des lignes de programme qui doivent être implantées dans la mémoire ROM de l'ensemble 50.

Cette partie de programme débute à la case K20 où l'on teste la valeur Y2,Y1 ; si celle-ci est différente de "01" on passe à la case K21, si elle est égale à "01" on passe à la case K22 où les valeurs de x et y deviennent respectivement y et -x. A la case K21 on teste la valeur de Y2,Y1 par rapport à "10"; s'il n'y a pas identité, on passe à la case K22 ; s'il y a identité, on va à la case K23 où les valeurs de x et y deviennent respectivement -x et -y. A la case K22 on teste si la valeur Y2,Y1 est identique à "11" s'il n'y a pas identité on va à la case K23 où les valeurs de x et y sont chargées dans les registres 60 et 61. S'il n'y a pas identité on va à la case K24 qui indique un changement de x et y qui deviennent -y et x. De la case K24 on passe à la case K23.

## Revendications

1. Dispositif de modulation pour moduler une onde en phase et en amplitude, dispositif comportant une entrée pour recevoir des groupements constitués de n éléments binaires les plus significatifs et de p éléments binaires les moins significatifs, un circuit de déphasage (7) pour fournir deux composantes déphasées de ladite onde et un circuit de modulation (8, 10) pour moduler en amplitude les deux composantes en fonction desdits groupements, caractérisé en ce que le circuit de modulation comporte des moyens de mémorisation (25) adressés par les n éléments binaires les plus significatifs du groupement d'entrée pour fournir une première valeur (x,y) approchée de l'amplitude correspondant audit groupement, ces moyens de mémorisation contenant la correspondance entre chaque combinaison de ces n éléments binaires et la valeur approchée d'amplitude qui lui est associée, et des moyens de calcul (30) pour obtenir une valeur (xF,yF) exacte d'amplitude en modifiant la première valeur approchée en fonction des p éléments binaires les moins significatifs du groupement d'entrée.

2. Dispositif de modulation selon la revendication 1, caractérisé en ce que les moyens de calcul sont constitués de moyens d'inversion de signe, de moyens d'addition d'une constante et de moyens de test de la valeur d'un élément binaire ou d'une combinaison logique d'éléments binaires.

3. Dispositif de modulation selon l'une des revendications 1 ou 2 convenant plus particulièrement pour satisfaire la recommandation V33 qui préconise une vitesse de transmission normale et une vitesse de transmission de repli, caractérisé en ce que les moyens de calculs comportent deux parties distinctes pour traiter les données relatives à chaque vitesse de transmission, suivie d'une partie commune aux deux vitesses.

4. Dispositif de modulation selon la revendication 3, caractérisé en ce que les moyens de calcul comportent, dans l'ordre, pour la première partie distincte un premier test (K4) sur la valeur du quatrième bit le moins significatif suivi, si le résultat de ce premier test est positif, d'une modification (K5) par addition d'une constante et inversion de signe de la première valeur approchée de l'amplitude, fournissant ainsi une seconde valeur approchée de l'amplitude, et un deuxième test (K6) sur le résultat de l'opération "OU-Exclusif" effectuée sur les deux éléments binaires les moins significatifs suivi, si le résultat de ce second test est positif, d'une modification (K7) par addition d'une constante et inversion de signe de la seconde valeur approchée de l'amplitude fournissant ainsi une troisième valeur approchée de l'amplitude, et pour la seconde partie distincte un premier test (K12) sur la valeur de l'élément binaire le plus significatif suivi, si le résultat de ce premier test est positif, d'une modification (K14) par addition d'une constante de la première valeur approchée de l'amplitude, fournissant ainsi une seconde valeur approchée de l'amplitude, et un deuxième test (K13) sur le résultat de l'opération "OU-Exclusif" effectuée sur les deux éléments binaires les moins significatifs suivi, si le résultat de ce second test est positif d'une modification par addition d'une constante et inversion de signe de la seconde valeur approchée de l'amplitude fournissant ainsi une troisième valeur approchée de l'amplitude, et pour la partie commune un troisième test (K20) sur la valeur du deuxième et du troisième élément binaire les moins significatifs suivi, si le résultat de ce troisième test est égal à une première valeur "01", d'une première modification (K23) par échange des coordonnées et inversion de signe de la troisième valeur approchée de l'amplitude ou, si le résultat de ce troisième test est égal à une seconde valeur "10", d'une seconde modification (K24) par inversion de signe de la troisième valeur approchée de l'amplitude ou, si le résultat de ce troisième test est égal à une troisième valeur "11", d'une troisième modification (K25) par échange des coordonnées et inversion de signe de la troisième valeur approchée de l'amplitude, obtenant à l'issue de l'une de ces trois modifications la valeur finale de l'amplitude.

5. Dispositif de modulation selon l'une des revendications 1 à 4, caractérisé en ce que les moyens de mémorisation et les moyens de calculs sont formés à partir d'un ensemble à microprocesseur.

## Patentansprüche

1. Modulationsvorrichtung zur Phasen- und Amplitudenmodulation einer Welle, wobei diese Vorrichtung einen Eingang enthält, über den sie Gruppen von jeweils n höherwertigen Bits und von jeweils p niederwertigen Bits empfängt, eine Phasenverschiebungsschaltung (7), über den sie zwei in der Phase verschobene Teilwellen abgibt, sowie eine Modulationsschaltung (8, 10), um diese beiden Teilwellen in Abhängigkeit von den genannten Bitgruppen in ihrer Amplitude zu modulieren, dadurch gekennzeichnet, daß die Modulationsschaltung Mittel zur Speicherung (25) enthält, die über die n höherwertigen Bits der Bitgruppe am Eingang adressiert werden, um einen dieser Bitgruppe in erster Näherung entsprechenden Amplitudenwert (x, y) zu liefern, und wobei die Speichermittel die Entsprechung zwischen jeder Kombination von n Bits und dem zugehörigen angenäherten Amplitudenwert enthalten, sowie Mittel zur Berechnung (30), um durch Änderung des ersten angenäherten Amplitudenwerts in Abhängigkeit von den p niederwertigen Bits der Bitgruppe am Eingang den exakten Amplitudenwert (xF, yF) zu erhalten.

2. Modulationsvorrichtung nach Anspruch 1, dadurch gekennzeichnet, daß die Mittel zur Berechnung aus Mitteln zur Vorzeichenumkehr, aus Mitteln zur Additiuon einer Konstante, sowie aus Mitteln zur Abfrage eines Bit-Wertes oder einer logischen Verknüpfung von Bit-Werten bestehen.

3. Modulationsvorrichtung nach einem der Ansprüche 1 oder 2, insbesondere dazu geeignet, die Empfehlung V33, die eine normale und eine verringerte Datenübertragungsrate vorschlägt, zu erfüllen und dadurch gekennzeichnet, daß die Mittel zu Berechnung zwei getrennte Teile, die die Daten jeweils entsprechend der Datenübertragungsrate verarbeiten, sowie nachfolgend einen gemeinsamen Teil für beide Datenübertragungsraten enthalten.

4. Modulationsvorrichtung nach Anspruch 3, dadurch gekennzeichnet, daß die Mittel zur Berechnung, in der genannten Reihenfolge, für den ersten getrennten Teil eine erste Abfrage (K4) des Werts des geringstwertigen vierten Bits enthalten, gefolgt bei positivem Ergebnis der ersten Abfrage von einer Änderung (K5) durch Addition einer Konstanten und durch Vorzeichenumkehr des ersten angenäherten Amplitudenwertes, so daß ein zweiter angenäherter Amplitudenwert entsteht, sowie eine zweite Abfrage (K6) des Ergebnisses einer EXKLUSIV-ODER-Verknüpfung der beiden geringstwertigen Bits, gefolgt bei positivem Ergebnis der zweiten Abfrage von einer Änderung (K7) durch Addition einer Konstanten und durch Vorzeichenumkehr des zweiten angenäherten Amplitudenwertes, so daß ein dritter angenäherter Amplitudenwert entsteht, sowie für den zweiten getrennten Teil eine erste Abfrage (K12) des Werts des höchstwertigen Bits, gefolgt bei positivem Ergebnis der ersten Abfrage von einer Änderung (K14) durch Addition einer Konstanten zum ersten angenäherten Amplitudenwert, so daß ein zweiter angenäherter Amplitudenwert entsteht, sowie eine zweite Abfrage (K13) des Ergebnisses einer EXKLUSIV-ODER-Verknüpfung der beiden geringstwertigen Bits, gefolgt bei positivem Ergebnis der zweiten Abfrage von einer Änderung durch Addition einer Konstanten und durch Vorzeichenumkehr des zweiten angenäherten Amplitudenwertes, so daß ein dritter angenäherter Amplitudenwert entsteht, sowie für den gemeinsamen Teil der Schaltung eine dritte Abfrage (K20) des Wertes der zweiten und dritten niederwertigen Bits, gefolgt, falls diese Bits den ersten Wert "01" aufweisen, von einer ersten Änderung (K23) durch Koordinatenaustausch und Vorzeichenumkehr des dritten angenäherten Amplitudenwertes, oder, falls diese Bits den zweiten Wert "10" aufweisen, von einer zweiten Änderung (K24) durch Vorzeichenumkehr des dritten angenäherten Amplitudenwertes, oder, falls diese Bits den dritten Wert "11" aufweisen, von einer dritten Änderung (K25) durch Koordinatenaustausch und Vorzeichenumkehr des dritten angenäherten Amplitudenwertes, so daß sich nach einer dieser drei Änderungen der Endwert der Amplitude ergibt.

5. Modulationsvorrichtung nach einem der Ansprüche 1 bis 4, <u>dadurch gekennzeichnet</u>, daß die Mittel zur Speicherung und zur Berechnung auf einer Mikroprozessor-Schaltung aufgebaut sind.

## Claims

1. Modulating arrangement for phase and amplitude modulating a wave, having an input for receiving groups of n most significant bits and p least significant bits, a phase shifting circuit (7) for producing two phase-shifted components of said wave and a modulating circuit (8, 10) for modulating the amplitude of the two components as a function of said groups, characterized in that the modulating circuit comprises storage means (25) addressed by n most significant bits of the input group to produce a first value (x, y) near to the amplitude that corresponds to said group, these storage means containing the correspondence between each combination of these n bits and the approximate amplitude value associated thereto, and calculating means (30) for obtaining an exact amplitude value (xF, yF) by changing the first approximate value as a function of the p least significant bits of the input bit group.

2. Modulating arrangement as claimed in Claimed 1, characterized in that the calculating means comprise sign inverter means, adder means of a constant and test means for testing the value of a bit or a logical bit combination.

3. Modulating arrangement as claimed in one of the Claims 1 or 2, more specifically suitable for satisfying Recommendation V.33 which indicates a normal transmission rate and a foldback transmission rate, characerized in that and the calculating means comprise two separate parts for processing the data with respect to each transmission rate, followed by a part common to the two rates.

4. Modulating arrangement as claimed in Claim 3, characterized in that the calculating means comprise, in this order, for the first separate part a first test (K4) of the value of the fourth least significant bit followed, if the result of this first test is positive, by a modification (K5) by the addition of a constant and a sign inversion of the first approximate amplitude value which thus produces a second approximate value of the amplitude, and a second test (K6) of the result of the EXCLUSIVE-OR operation carried out of the two least significant bits followed, if the result of this second test is positive, by a modification (K7) by the addition of a constant and a sign inversion of the second approximate value of the amplitude which thus produces a third approximate value of the amplitude, and for the second separate part a first test (K12) is made of the value of the most significant bit followed, if the result of this first test is positive, by a modification (K14) by the addition of a constant of the first approximate value of the amplitude which thus produces a second approximate value of the amplitude, and a second test (K13) of the result of the OR-EXCLUSIVE operation carried out of the two least significant bits followed, if the result of this second test is positive, by a modification (K14) by the addition of a constant and a sign inversion of the second approximate value of the amplitude thus producing a third approximate value of the amplitude, and for the common part of a third test (K20) of the value of the second and of the third least significant bit followed, if the result of this third test is equal to a first value "01", by a first modification (K23) by an exchange of the coordinates and sign inversion of the third approximate value of the amplitude or, if the result of this third test is equal to a second value "10", by a second modification (K24) by a sign inversion of the third approximate value of the amplitude or, if the result of this third test is equal to a third value "11", by a third modification (K25) by an exchange of the coordinates and a sign inversion of the third approximate value of the amplitude, which obtains the final value of the amplitude at the end of one of these three modifications.

5. Modulating arrangement as claimed in one of the Claims 1 to 4, characterized in that the storage means and calculating means are formed by a microprocessor assembly.

FIG.1

FIG.2

FIG.3

FIG. 4

FIG.5

| Q6 | Q5 | Q4 | x | y |
|----|----|----|----|----|
| 0 | 0 | 0 | -8 | -3 |
| 0 | 0 | 1 | -4 | -3 |
| 0 | 1 | 0 | 4 | -3 |
| 0 | 1 | 1 | 0 | -3 |
| 1 | 0 | 0 | 8 | -3 |
| 1 | 0 | 1 | -4 | -7 |
| 1 | 1 | 0 | 4 | -7 |
| 1 | 1 | 1 | 0 | -7 |

| Q4 | Q3 | x | y |
|----|----|----|----|
| 0 | 0 | 7 | 1 |
| 0 | 1 | 3 | -3 |
| 1 | 0 | 7 | -7 |
| 1 | 1 | -1 | -7 |